(19) Europäisches Patentamt
European Patent Office
Office européen des brevets

(11) **EP 3 919 778 B1**

(12) **EUROPEAN PATENT SPECIFICATION**

(45) Date of publication and mention of the grant of the patent:
**28.12.2022 Bulletin 2022/52**

(21) Application number: **21176549.0**

(22) Date of filing: **28.05.2021**

(51) International Patent Classification (IPC):
**F16H 7/08** *(2006.01)*    **F02B 67/06** *(2006.01)*
**F16G 13/04** *(2006.01)*    **F16H 7/18** *(2006.01)*

(52) Cooperative Patent Classification (CPC):
**F16H 7/08; F02B 67/06; F16G 13/04; F16H 7/18;**
F02B 61/02; F16H 2007/0812; F16H 2007/0872;
F16H 2007/0893; F16H 2007/0895

(54) **INTERNAL COMBUSTION ENGINE AND STRADDLED VEHICLE**

BRENNKRAFTMASCHINE UND GRÄTSCHSITZFAHRZEUG

MOTEUR À COMBUSTION INTERNE ET VÉHICULE À ENFOURCHER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.06.2020 JP 2020098411**

(43) Date of publication of application:
**08.12.2021 Bulletin 2021/49**

(73) Proprietor: **Yamaha Hatsudoki Kabushiki Kaisha Iwata-shi, Shizuoka 438-8501 (JP)**

(72) Inventors:
• **HASHIMOTO, Hideaki**
  **Shizuoka-ken, 438-8501 (JP)**
• **YAMAMOTO, Kensuke**
  **Shizuoka-ken, 438-8501 (JP)**
• **IIDA, Kaichi**
  **Shizuoka-ken, 438-8501 (JP)**

• **MOTOWAKI, Takayuki**
  **Shizuoka-ken, 438-8501 (JP)**
• **KAWAMOTO, Hironobu**
  **Shizuoka-ken, 438-8501 (JP)**
• **MOTOMIYA, Yusuke**
  **Shizuoka-ken, 438-8501 (JP)**
• **OCHIAI, Kazuki**
  **Shizuoka-ken, 438-8501 (JP)**
• **KUROKAWA, Shingo**
  **Shizuoka-ken, 438-8501 (JP)**

(74) Representative: **Grünecker Patent- und Rechtsanwälte**
**PartG mbB**
**Leopoldstraße 4**
**80802 München (DE)**

(56) References cited:
**JP-A- 2009 228 673      JP-A- 2019 120 243**
**US-A1- 2008 223 348**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an internal combustion engine according to the preamble of independent claim 1 and a straddled vehicle. Such an internal combustion engine can be taken from the prior art document JP 2019 120243 A.

In a cylinder head of an internal combustion engine for a motorcycle or the like, an intake valve and an exhaust valve to open or close a combustion chamber, and a cam shaft to drive these are disposed. Via a cam chain, the cam shaft is connected to a crankshaft so as to rotate in accordance with the rotation of the crankshaft. The cam chain is accommodated in a cam chain chamber that is defined by the cylinder head and a cylinder body or the like that is located below the cylinder head.

The tension to act on the cam chain varies with the rotational speed of the crankshaft. In order to keep an appropriate tension on the cam chain, a structure is known in which a chain tensioner is disposed within the cam chain chamber in order to apply a force on the cam chain in between a drive sprocket wheel and a driven sprocket wheel.

The cam shaft decelerates during an up period of each cam (exhaust cam or intake cam), and accelerates during a down period. While the cam shaft makes one turn, an up period and a down period of the exhaust cam and an up period and a down period of the intake cam consecutively occur in this order; therefore, the cam shaft undergoes a deceleration, an acceleration, a deceleration, and an acceleration in this order. Such accelerations and decelerations of the cam shaft may cause a lift of the cam chain near a meshing start position, i.e., a position at which engagement begins between the cam chain and the driven sprocket wheel. Specifically, a lift of the cam chain may occur after acceleration of the cam shaft. From a down period of the exhaust cam through an up period of the intake cam, the cam shaft decelerates relative to the cam chain (which has become lifted after its acceleration), and therefore a mismeshing is likely to occur. As used herein, a "mismeshing" means the cam chain becoming engaged in an improper tooth/groove, on the upstream side of the meshing start position. When a "mismeshing" occurs and it keeps rotating toward a meshing end position (i.e., a position at which engagement between the cam chain and the driven sprocket wheel ends), synchronization between the crankshaft and the cam shaft is compromised, thus resulting in a state of "skipping the tooth", as it were.

Patent Document 1 proposes a configuration in which a chain guide being made of a piece of elastic is attached at a position on a case or the like that is near the meshing start position, this being in order to prevent an outward lift and hop of the cam chain (i.e., to restrain the cam chain from leaving the driven sprocket wheel).

Patent Document 1: Japanese Utility Model No. 56-44926

However, with the configuration of Patent Document 1, in which the chain guide is an elastic member, the distance (clearance) between the back surface of the cam chain and the chain guide may fluctuate, such that the function of the chain guide may not be suitably exhibited.

Moreover, since the chain guide is a separate piece from the cylinder head and the like, an increase in the number of parts and the introduction of an additional step of attaching the chain guide may result in an increased production cost. Furthermore, it may be difficult to accurately attach the chain guide at the desired position.

Moreover, depending on the position at which the chain guide is provided, a mismeshing may occur upstream of the chain guide; in this case, mismeshing will not be eliminated by guiding the cam chain with the chain guide because the cam chain would already have engaged in an improper tooth/groove. The aforementioned problem (mismeshing of the cam chain) is particularly worsened when the chain tensioner is malfunctioning.

The present invention has been made in order to solve the aforementioned problem, and an objective thereof is to provide an internal combustion engine in which a cam chain that has become lifted can promptly find a proper tooth/groove, so that mismeshing of the cam chain can be suppressed more reliably. According to the present invention said object is solved by an internal combustion engine having the features of the independent claim 1. Preferred embodiments are laid down in the dependent claims.

The present specification discloses internal combustion engines and straddled vehicles as recited in the following Items.

[Item 1]

An internal combustion engine comprising:

a crankcase;
a cylinder body extending in a predetermined direction from the crankcase;
a cylinder head coupled to the cylinder body;
a cylinder head cover coupled to the cylinder head;
a cam chamber defined by the cylinder head and the cylinder head cover;
a cam chain chamber defined by the crankcase, the cylinder body, the cylinder head, and the cylinder head cover;
a crankshaft disposed in the crankcase;

a drive sprocket wheel which is disposed in the cam chain chamber and which rotates integrally with the crankshaft;
a cam shaft disposed in the cam chamber and the cam chain chamber;
a driven sprocket wheel which is disposed in the cam chain chamber and which rotates integrally with the cam shaft;
a cam chain being disposed in the cam chain chamber and wound across the drive sprocket wheel and the driven sprocket wheel;
a cam chain guide which is disposed in the cam chain chamber and which guides the cam chain;
a chain tensioner which presses against the cam chain via the cam chain guide in between the drive sprocket wheel and the driven sprocket wheel; and
a rib which is disposed in the cam chain chamber in such a manner as to restrain a lift of the cam chain, wherein, the rib is monolithically formed with the cylinder head;
the cam chain includes a plurality of guide plates disposed on an outside of the cam chain regarding a width direction of the cam chain, and a plurality of link plates disposed inward of the plurality of guide plates regarding the width direction of the cam chain; each of the plurality of link plates includes a pair of first pinholes into each of which a pin is inserted, characterized by a pair of link teeth extending from the pair of first pinholes toward a meshing side; and, given a length Lcl from a center of each of the pair of first pinholes of the link plate to a leading end of a corresponding link tooth, a length Lcs from a center of each of the pair of first pinholes to a non-meshing edge of the link plate, an interval P between the pair of first pinholes, an outermost radius Rso of the driven sprocket wheel, and a radius Rp of a pitch circle in a region where the cam chain is meshed with the driven sprocket wheel, such that $\Theta = \cos^{-1}\{Rp/(Rso +Lcl)\}$, wherein the rib includes a portion located upstream of a meshing start position (SP), the meshing start position (SP) defining a position at which engagement begins between the cam chain and the driven sprocket wheel; the rib at least locally includes a region inside a circle having a radius Lcs andhaving a center at a point which is located upstream of the meshing start position (SP) by $(Rso+Lcl)' \sin e-P' \cos 6$ in a direction substantially parallel to a direction of travel of the cam chain and which is distant from the meshing start position (SP) by $P\cdot\sin\Theta$ toward a non-meshing side in a direction substantially parallel to a height direction of the cam chain.

The internal combustion engine according to Item 1 includes the rib disposed in the cam chain chamber, thus being able to restrain a lift of the cam chain with the rib. Since the rib is monolithically formed with the cylinder head, the provision of the rib does not result in an increase in the number of parts, thereby suppressing an increase in the production cost as compared to the case of attaching a rib that is a separate piece from the cylinder head. Moreover, since the rib is monolithically formed with the cylinder head, the rib can be accurately disposed in the desired position. Furthermore, the rib being monolithically formed with the cylinder head can naturally be a rigid member having a certain level of rigidity or greater. Therefore, the shortest distance between the rib and the cam chain is less likely to fluctuate than in the case where an elastic member is attached as a rib, such that the rib can suitably function as a guide for the cam chain.

Moreover, since the rib includes a portion located upstream of the meshing start position of the cam chain with respect to the driven sprocket wheel, a lift at the meshing start position can be suitably restrained. Furthermore, when the rib includes a portion located upstream of the meshing start position, a sound caused during a malfunction of the chain tensioner by the cam chain hitting that portion will allow the rider to know that an abnormality exists (i.e., malfunctioning of the chain tensioner)

Moreover, because the rib includes a portion located upstream of a meshing start position and at least locally includes a region inside a circle having a radius Lcs and having a center at a point which is located upstream of the meshing start position by $(Rso+Lcl) \cdot \sin\theta - P \cdot \cos\theta$ in a direction substantially parallel to a direction of travel of the cam chain and which is distant from the meshing start position by $P\cdot\sin\theta$ toward a non-meshing side in a direction substantially parallel to a height direction of the cam chain, even if the cam chain is lifted on the upstream side of the meshing start position, it can be placed back into the proper tooth/groove of the driven sprocket wheel at the meshing start position. Therefore, even if the chain tensioner ceases to adequately function, mismeshing of the cam chain can still be restrained.

[Item 2]

The internal combustion engine of Item 1, wherein,

the rib includes a portion located downstream of the meshing start position;
a position at which a distance between the cam chain and the rib is shortest is in the region where the cam chain is meshed with the driven sprocket wheel; and,
given a shortest distance Dmin between the cam chain and the rib, a length Lcl from a center of each of the pair of first pinholes to a leading end of a corresponding link tooth, an outermost radius Rso of the driven sprocket wheel, and a radius Rp of a pitch circle in the region where the cam chain is meshed with the driven sprocket wheel, the relationship $Dmin<Lcl-(Rp-Rso)$ is satisfied.

When the shortest distance Dmin between the cam chain and the rib, the length Lcl from the center of the each pinhole (first pinhole) of the link plate to the leading end of the corresponding link tooth (i.e., the "meshing side dimension" of the cam chain), the outermost radius Rso of the driven sprocket wheel, and the radius Rp of a pitch circle in a region where the cam chain is meshed with the driven sprocket wheel satisfy the relationship Dmin<Lcl-(Rp-Rso), the cam chain abutting with the rib (i.e., being guided by the rib) has a meshing margin with the driven sprocket wheel, so that mismeshing of the cam chain can be better restrained.

[Item 3]

The internal combustion engine of Item 1, wherein,

the rib includes a portion located downstream of the meshing start position;
a position at which a distance between the cam chain and the rib is shortest is in the region where the cam chain is meshed with the driven sprocket wheel;
each of the plurality of guide plates includes a pair of second pinholes; and,
given a shortest distance Dmin between the cam chain and the rib, a length Lcg from a pitch line being a straight line that contains centers of the pair of second pinholes to a center of a meshing edge of each guide plate, an outermost radius Rso of the driven sprocket wheel, and a radius Rp of a pitch circle in the region where the cam chain is meshed with the driven sprocket wheel, the relationship Dmin<Lcg-(Rp-Rso) is satisfied.

When the shortest distance Dmin between the cam chain and the rib, the length Lcg from the pitch line, i.e., a straight line containing the centers of the pair of pinholes (second pinholes) of the guide plate to the center of the meshing edge of each guide plate, the outermost radius Rso of the driven sprocket wheel, and the radius Rp of a pitch circle in a region where the cam chain is meshed with the driven sprocket wheel satisfy the relationship Dmin<Lcg-(Rp-Rso), a lateral shift of the cam chain can be restrained.

[Item 4]

The internal combustion engine of any of Items 1 to 3, wherein a position at which a distance between the cam chain and the rib is shortest is within an upstream half of the region where the cam chain is meshed with the driven sprocket wheel.
When the teeth of the driven sprocket wheel receive a gearing load from the cam chain, the load is chiefly distributed on the tense-side half, so that a lift of the cam chain is likely to occur on the slack-side half. Therefore, the position at which the distance between the cam chain and the rib becomes shortest (i.e., the position defining the shortest distance Dmin) is preferably within an upstream half of the region where the cam chain is meshed with the driven sprocket wheel (i.e., the tense-side half).

[Item 5]

The internal combustion engine of Item 4, wherein the distance between the cam chain and the rib becomes smaller from an upstream end toward a downstream end of the rib, on an upstream side from the position at which the distance between the cam chain and the rib is shortest.
Moreover, from a standpoint of allowing the rib to suitably function as a guide for the cam chain, the distance between the cam chain and the rib preferably becomes smaller from the upstream end toward the downstream end of the rib, on the upstream side from the position at which the distance between the cam chain and the rib is shortest.

[Item 6]

The internal combustion engine of any of Items 1 to 5, wherein the rib is disposed so as to overlap a center of the driven sprocket wheel along a thickness direction thereof when viewed from a radial direction of the driven sprocket wheel defined at the meshing start position.
From a standpoint of better restraining mismeshing and a lateral shift of the cam chain, the rib is preferably disposed so as to overlap the center of the driven sprocket wheel along the thickness direction when viewed from a radial direction of the driven sprocket wheel defined at the meshing start position.

[Item 7]

A straddled vehicle comprising the internal combustion engine of any of Items 1 to 6.

The internal combustion engines according to Items 1 and 6 are suitably used in straddled vehicles.

According to the present teaching embodiment, there is provided an internal combustion engine in which a cam chain that has become lifted can promptly find a proper tooth/groove, so that mismeshing of the cam chain can be suppressed more reliably.

BRIEF DESCRIPTION OF THE DRAWINGS

FIG. 1 is a left side view schematically showing a motorcycle (straddled vehicle) 1 according to an embodiment of the present teaching.

FIG. 2 is a cross-sectional view schematically showing an engine 20 of the motorcycle 1.

FIG. 3 is a cross-sectional view schematically showing a portion of the engine 20.

FIG. 4 is a cross-sectional view schematically showing a portion of the engine 20.

FIG. 5A is a plan view schematically showing a cam chain 81.

FIG. 5B is an exploded perspective view schematically showing the cam chain 81.

FIG. 6 is a cross-sectional view schematically showing a portion of the engine 20.

FIG. 7 is a plan view schematically showing a cylinder head 50.

FIG. 8A is a diagram showing a configuration in which a rib 90 does not include a portion located upstream of a meshing start position SP (a case where it is composed only of a portion located downstream of the meshing start position SP).

FIG. 8B is a diagram showing a configuration in which a rib 90 does not include a portion located upstream of a meshing start position SP (a case where it includes a portion located downstream of the meshing start position SP and a portion located at the meshing start position SP).

FIG. 9 is a diagram showing a configuration in which the rib 90 includes a portion located upstream of the meshing start position SP.

FIG. 10 is a diagram for describing a preferable configuration for the rib 90.

FIG. 11 is a plan view schematically showing a cylinder head 50.

FIG. 12 is an exploded perspective view schematically showing a cam chain 81.

DETAILED DESCRIPTION

Hereinafter, with reference to the drawings, a straddled vehicle according to an embodiment of the present teaching will be described. In the following description, a motorcycle will be illustrated as a straddled vehicle according to an embodiment of the present teaching. However, there is no limitation as to the type of the motorcycle: a so-called scooter type, moped type, off-road type, on-road type, or any other type may be applicable. Moreover, a straddled vehicle according to an embodiment of the present teaching is not limited to a motorcycle, but may be an ATV (All Terrain Vehicle), a four-wheeled buggy, or the like.

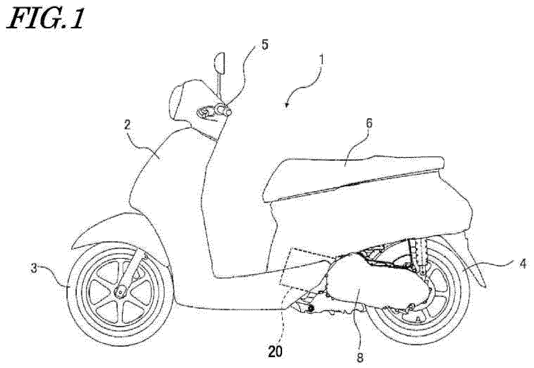

First, with reference to FIG. 1, the overall configuration of a motorcycle 1 according to the present embodiment will be described. FIG. 1 is a left side view schematically showing the motorcycle 1. In the following description, "front", "rear", "right", "left", "up/above", and "down/below" respectively mean the front, rear, right, left, up/above, and down/below as viewed from a rider who sits on the seat of the motorcycle 1. Herein, "up/above" and "down/below" respectively refer to the up/above direction and the down/below direction along the vertical direction when the motorcycle 1 is stopped on the horizontal plane. The aforementioned directions are also relied upon when describing various parts of the engine. Therefore, "front", "rear", "right", "left", "up/above", and "down/below", as used of an engine, respectively mean the front, rear, right, left, up/above, and down/below as defined when the engine is mounted on the motorcycle 1.

The motorcycle 1 is a motorcycle of scooter type. As shown in FIG. 1, the motorcycle 1 includes a vehicle main body 2, a front wheel 3, a rear wheel 4, a handle bar 5, and a seat 6. The vehicle main body 2 supports the front wheel 3 and the rear wheel 4. The handle bar 5 and the seat 6 are attached to the vehicle main body 2. The motorcycle 1 further includes an engine 20 and a transmission 8. The engine 20 and the transmission 8 are located below the seat 6. The transmission 8 is a continuously variable transmission (CVT), although this is not a limitation.

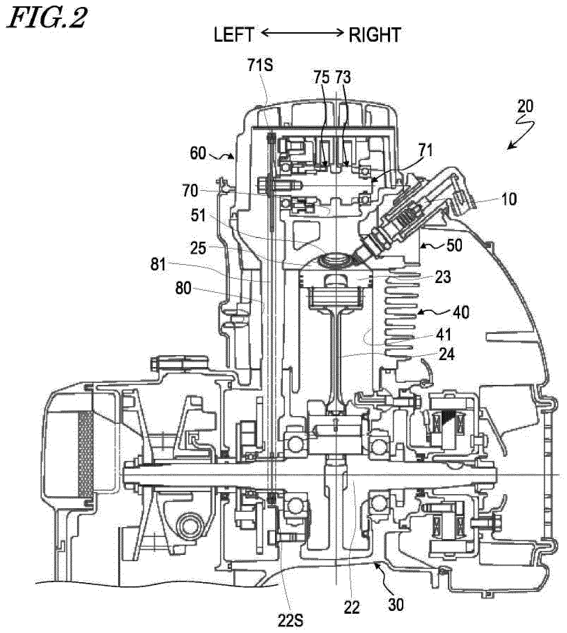

With reference to FIG. 2, FIG. 3, and FIG. 4, the configuration of the engine (internal combustion engine) 20 will be described.

As shown in FIG. 2, the engine 20 includes a crankcase 30, a cylinder body 40, a cylinder head 50, and a cylinder head cover 60. The cylinder body 40 extends in a predetermined direction from the crankcase 30, or more specifically, frontward. As used herein, "frontward" is broadly applicable to both the case of extending horizontally forward, and the case of extending with a tilt from the horizontal direction. The cylinder body 40 and the crankcase 30 may be formed as separate pieces, or monolithically formed. The cylinder head 50 is disposed frontward of the cylinder body 40, and is coupled to the front of the cylinder body 40. The cylinder head cover 60 is disposed frontward of the cylinder head 50, and is coupled to the front of the cylinder head 50. The cylinder head 50 and the cylinder head cover 60 may be formed as separate pieces (as is illustrated) or monolithically formed.

As shown in FIG. 2, the engine 20 includes a crankshaft 22 extending along the vehicle width direction (i.e., the right-left direction of the vehicle). The crankshaft 22 is disposed in the crankcase 30. A drive sprocket wheel 22S is attached slightly leftward of the center of the crankshaft 22 along the vehicle width direction. The drive sprocket wheel 22S is disposed in a cam chain chamber 80 (described later), and rotates integrally with the crankshaft 22.

A cylinder 41 is formed inside the cylinder body 40. The cylinder 41 extends frontward from the crankcase 30. The engine 20 is a single-cylindered engine having one cylinder 41. A piston 23 is accommodated in the cylinder 41. The piston 23 is connected to the crankshaft 22 via a connecting rod 24. Note that the engine 20 may be a multi-cylindered engine having a plurality of cylinders. Although the example herein illustrates the engine 20 as being disposed so that the cylinder 41 extends frontward (i.e., the angle between the cylinder axis and the horizontal direction is relatively small), the engine 20 may be disposed so that the cylinder 41 extends upward (i.e., the angle between the cylinder axis and the horizontal direction is relatively large).

The engine 20 includes a combustion chamber 25. The combustion chamber 25 is defined by a top surface of the piston 23, an inner peripheral surface of the cylinder 41, and a recess 51 made in the cylinder head 50. In the combustion chamber 25, an ignition device 10 to ignite a fuel in the combustion chamber 25 is provided.

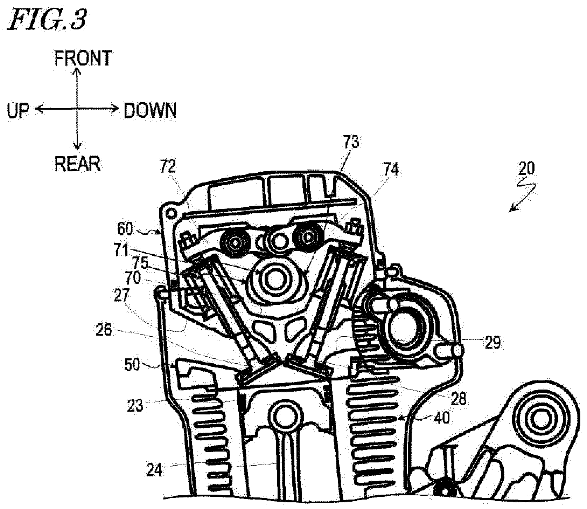

As shown in FIG. 3, the engine 20 includes an intake valve 26 and an exhaust valve 28. The intake valve 26 opens or closes communication between an intake channel 27 and the combustion chamber 25. The exhaust valve 28 opens or closes communication between the combustion chamber 25 and an exhaust channel 29.

The engine 20 includes a cam chamber 70. The cam chamber 70 is defined by the cylinder head 50 and the cylinder head cover 60. The engine 20 includes a cam shaft 71 extending along the right-left direction. The cam shaft 71 is disposed in the cam chamber 70 and the cam chain chamber 80 (described later). The cam shaft 71 is disposed between the cylinder head 50 and the cylinder head cover 60. At the left end of the cam shaft 71, a driven sprocket wheel (cam chain sprocket) 71S is attached. The driven sprocket wheel 71S is disposed in the cam chain chamber 80, and rotates integrally with the cam shaft 71. A cam chain 81 (described later) is wound around the driven sprocket wheel 71S. The cam shaft 71 moves in conjunction with the cam chain 81.

An intake cam 73 and an exhaust cam 75 are provided on the cam shaft 71. The intake cam 73 and the exhaust cam 75 are disposed in the cam chamber 70. The intake cam 73 and the exhaust cam 75 are fixed on the cam shaft 71, and rotate integrally with the cam shaft 71. The upper end of the intake valve 26 is connected to one end of an intake rocker arm 72. The other end of the intake rocker arm 72 is in contact with the intake cam 73, such that the intake rocker arm 72 is driven by the intake cam 73. The upper end of the exhaust valve 28 is connected to one end of an exhaust rocker arm 74. The other end of the exhaust rocker arm 74 is in contact with the exhaust cam 75, such that the exhaust rocker arm 74 is driven by the exhaust cam 75.

The engine 20 includes the cam chain chamber 80, which is defined by the crankcase 30, the cylinder body 40, the cylinder head 50, and the cylinder head cover 60. The cam chain chamber 80 is disposed leftward of the cylinder 41. Note that the cam chain chamber 80 may be disposed rightward of the cylinder 41. The cam chain chamber 80 and the cam chamber 70 are in communication.

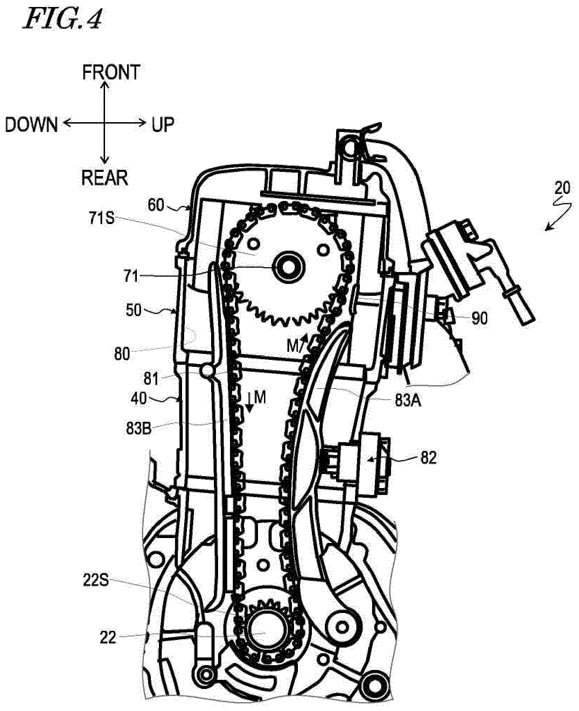

As shown in FIG. 4, the engine 20 includes the cam chain 81, a chain tensioner 82, and a first cam chain guide 83A and a second cam chain guide 83B. The cam chain 81, the chain tensioner 82, the first cam chain guide 83A, and the second cam chain guide 83B are disposed in the cam chain chamber 80. The cam chain 81 is wound across the drive sprocket wheel 22S and the driven sprocket wheel 71S. The cam chain 81 moves in conjunction with the crankshaft 22. The cam chain 81 travels (moves) in the direction of arrow M in the figure.

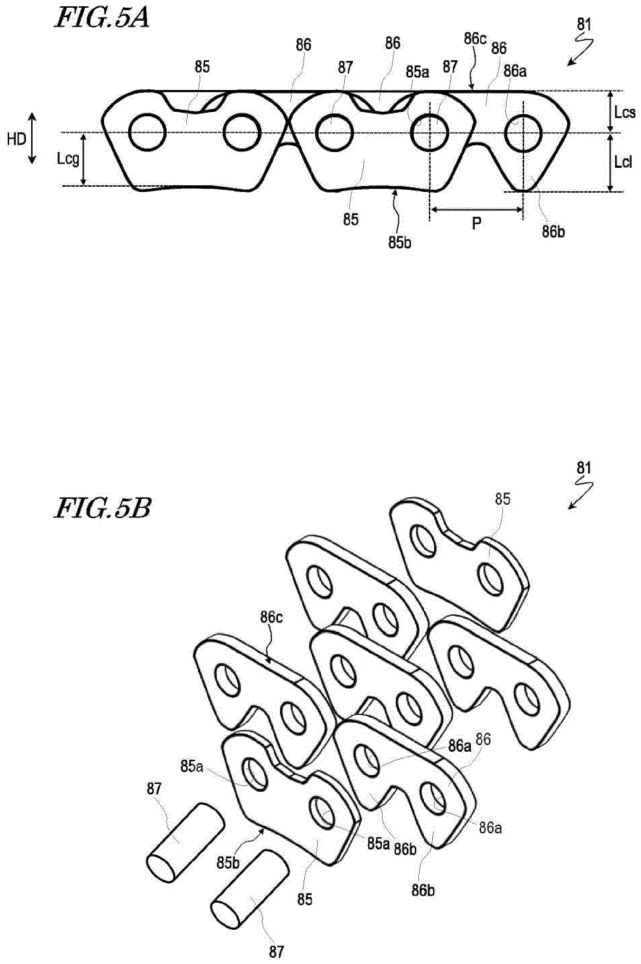

As shown in FIG. 5A and FIG. 5B, the cam chain 81 includes a plurality of guide plates 85, a plurality of link plates 86, and a plurality of pins 87. The plurality of guide plates 85 are disposed on the outside of the cam chain 81 regarding its width direction. The plurality of link plates 86 are disposed inward of the plurality of guide plates 85 regarding the width direction of the cam chain 81. Although the example shown illustrates that the plurality of link plates 86 are disposed in three rows, the configuration of the cam chain 81 is not limited thereto.

Each of the plurality of link plates 86 includes: a pair of first pinholes 86a into each of which a pin 87 is inserted; and a pair of link teeth 86b extending from the pair of first pinholes 86a toward the meshing side. Each of the plurality of guide plates 85 includes a pair of second pinholes 85a into each of which a pin 87 is inserted. The plurality of guide plates 85 and the plurality of link plates 86 are linked by a plurality of pins 87. In the region where the cam chain 81 is sufficiently meshed with the driven sprocket wheel 71S, a trajectory that is drawn by the centers of the first pinholes 86a and the second pinholes 85a is referred to as a "pitch circle".

The first cam chain guide 83A is disposed so as to be in contact with the slack side of the cam chain 81, thus guiding the slack side (which herein is the upper side) of the cam chain 81. The second cam chain guide 83B is disposed so as to be in contact with the tense side of the cam chain 81, thus guiding the tense side (which herein is the lower side) of the cam chain 81. In between the drive sprocket wheel 22S and the driven sprocket wheel 75S, the chain tensioner 82 presses against the cam chain 81 via the first cam chain guide 83A. The chain tensioner 82 serves to keep an appropriate tension on the cam chain 81. Herein, the chain tensioner 82 is attached to the cylinder body 40. The chain tensioner 82 may instead be attached to the cylinder head 50.

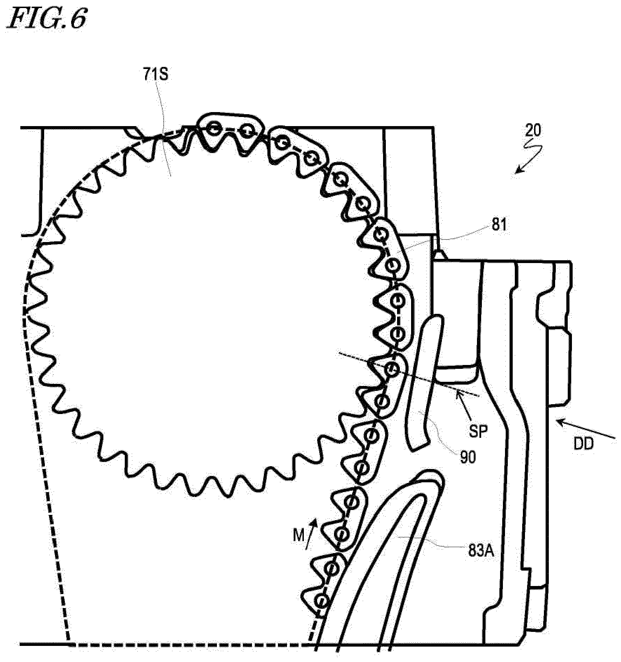

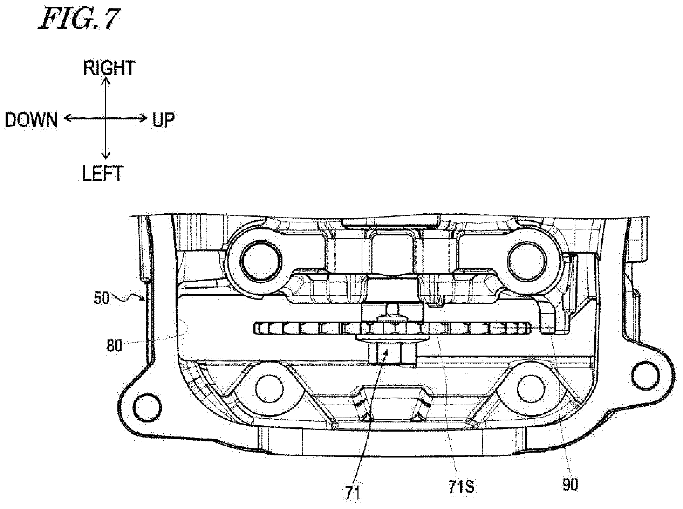

In the present embodiment, the engine 20 further includes a rib 90 that is disposed in the cam chain chamber 80, as shown in FIG. 4. Hereinafter, also with reference to FIG. 6 and FIG. 7, the specific configuration of the rib 90 will be described.

As shown in FIG. 6, the rib 90 is located slightly upward of the first cam chain guide 83A, and near a meshing start position SP of the cam chain 81 with respect to the driven sprocket wheel 71S, so as to restrain a lift of the cam chain 81. As used herein, the "meshing start position SP" is a boundary between: a region where the cam chain 81 is sufficiently meshed with the driven sprocket wheel 71S; and a region upstream thereof, where the cam chain 81 takes a linear shape while abutting neither the driven sprocket wheel 71S nor the first cam chain guide 83A (hereinafter referred to as the "free-span region"). In other words, the "meshing start position SP" is a boundary between the pitch circle and the free-span region.

The rib 90 is monolithically formed with the cylinder head 50. Moreover, the rib 90 includes a portion located upstream of the meshing start position SP, a portion located at the meshing start position SP, and a portion located downstream of the meshing start position SP. As used herein, "upstream" and "downstream" are defined on the basis of the direction of travel M of the cam chain 81; "upstream" means the upstream side along the direction of travel M of the cam chain 81, whereas "downstream" means the downstream side along the direction of travel M of the cam chain 81. As shown in FIG. 7, the rib 90 is disposed so as to overlap the center of the driven sprocket wheel 71S along its thickness direction when viewed from a radial direction of the driven sprocket wheel 71S (i.e., direction DD shown in FIG. 6) defined at the meshing start position SP.

As described above, the engine 20 according to the present embodiment includes the rib 90 disposed in the cam chain chamber 80, thus being able to restrain a lift of the cam chain 81 with the rib 90. Since the rib 90 is monolithically formed with the cylinder head 50, the provision of the rib 90 does not result in an increase in the number of parts, thereby suppressing an increase in the production cost as compared to the case of attaching a rib that is a separate piece from the cylinder head 50. Moreover, since the rib 90 is monolithically formed with the cylinder head 50, the rib 90 can be accurately disposed in the desired position. Furthermore, the rib 90 being monolithically formed with the cylinder head 50 can naturally be a rigid member having a certain level of rigidity or greater (e.g. a metal member made of a metal material). Therefore, the shortest distance between the rib 90 and the cam chain 81 is less likely to fluctuate than in the case where an elastic member is attached as a rib, such that the rib 90 can suitably function as a guide for the cam chain 81.

Moreover, since the rib 90 includes a portion located upstream of the meshing start position SP of the cam chain 81 with respect to the driven sprocket wheel 71S, a lift at the meshing start position SP can be suitably restrained.

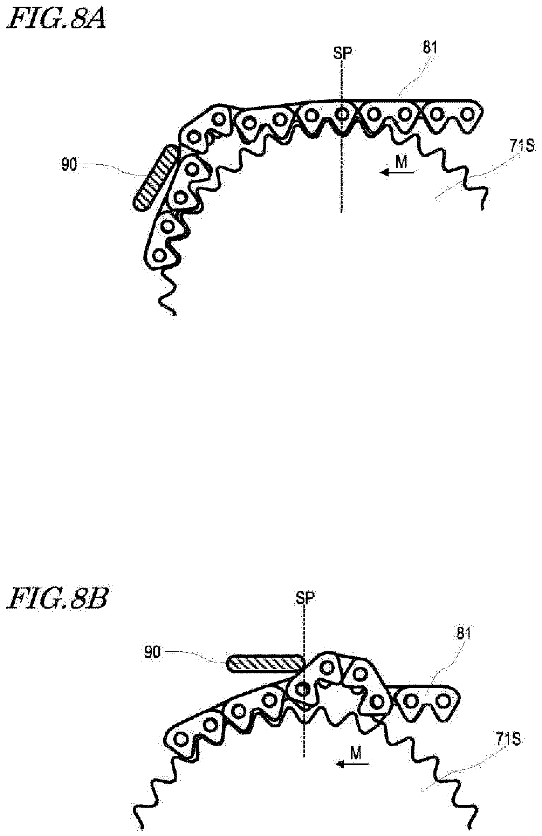

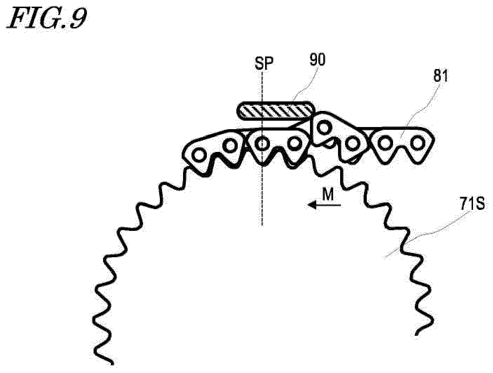

FIG. 8A and FIG. 8B show configurations in which the rib 90 does not include a portion located upstream of the meshing start position SP. As shown in FIG. 8A, when the rib 90 is composed only of a portion located downstream of the meshing start position SP, even if the lifted cam chain 81 is guided by the rib 90, the cam chain 81 has already been meshed with an improper tooth/groove, so that mismeshing cannot be eliminated. Moreover, in the configuration shown in FIG. 8B, the rib 90 includes a portion located at the meshing start position SP, but may still not be able to eliminate mismeshing. On the other hand, in the present embodiment, where the rib 90 includes a portion located upstream of the meshing start position SP of the cam chain 81 with respect to the driven sprocket wheel 71S, and further has a configuration described below, the cam chain 81 has not yet been engaged in an improper tooth/groove when the lifted cam chain 81 becomes guided by the rib 90, as shown in FIG. 9; as a result, mismeshing can be restrained.

Furthermore, when the rib 90 includes a portion located upstream of the meshing start position SP, a sound caused during a malfunction of the chain tensioner 82 by the cam chain 81 hitting that portion will allow the rider to know that an abnormality exists (i.e., malfunctioning of the chain tensioner 82).

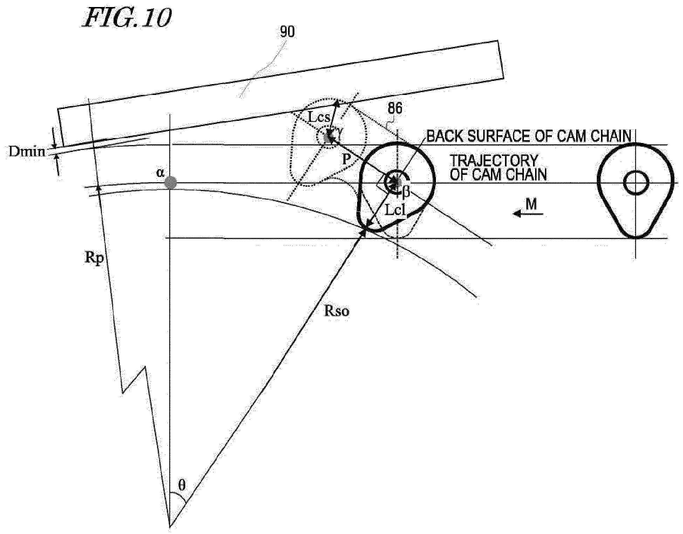

Now, with reference to FIG. 10, a more specific configuration for the rib 90 for restraining mismeshing at the meshing start position SP will be described. In the following description, the length from the center of each of the pair of first pinholes 86a of a link plate 86 to the leading end of a corresponding link tooth 86b (i.e., the "meshing side dimension" of the cam chain 81) will be denoted as Lcl; and the length from the center of each of the pair of first pinholes 86a to the non-meshing edge 86c of the link plate 86 (i.e., the "non-meshing side dimension" of the cam chain 81) will be denoted as Lcs (see FIG. 5A). Moreover, the interval (chain pitch) between the pair of first pinholes 86a will be denoted as P; and the length from a straight line containing the centers of the pair of second pinholes 85a of the guide plate 85 ("pitch line") to the center of the meshing edge 85b of the guide plate 85 will be denoted as Lcg (see FIG. 5A). Furthermore, the outermost radius of the driven sprocket wheel 71S will be denoted as Rso, and the radius of the pitch circle will be denoted as Rp.

Consider three points $\alpha$, $\beta$ and $\gamma$ shown in FIG. 10. Point $\alpha$ corresponds to the meshing start position SP. Point $\beta$ is at a position which is located upstream of point $\alpha$ by $(Rso+Lcl) \cdot \sin\theta$ in a direction substantially parallel to the direction of travel M of the cam chain 81. Point $\gamma$ is at a position which is located upstream of point $\alpha$ by $(Rso+Lcl) \cdot \sin\theta -P \cdot \cos\theta$ in a direction substantially parallel to the direction of travel M of the cam chain 81 and which is distant from

point $\alpha$ by P•sin$\theta$ toward the non-meshing side in a direction substantially parallel to the height direction of the cam chain 81. Herein, the height direction of the cam chain 81 is a direction represented by arrow HD in FIG. 5A, which is orthogonal to both of the center axis of the pinhole (the first pinhole 86a or the second pinhole 85a) and the pitch line. As can be seen from FIG. 10, the relationship (Rso+Lcl) • cos$\theta$ = Rp holds true, and this can be expressed as $\theta = \cos^{-1}\{Rp/(Rso+Lcl)\}$.

The link plate 86 shown in FIG. 10 is in a state such that the centers of the pair of first pinholes 86a are located at point $\beta$ and point $\gamma$. This state is a state where the cam chain 81 is lifted on the upstream side of the meshing start position SP (point a), such that the leading ends of the link teeth 86b of the link plate 86 are located on the circumference of a circumcircle of the driven sprocket wheel 71S. Since the rib 90 is disposed so as to abut (interfere) with the link plate 86 in this state, the cam chain 81 can be suitably guided so that mismeshing is restrained. Therefore, it is preferable that the rib 90 at least locally includes a region inside a circle having a radius Lcs and having a center at point $\gamma$. As a result of this, even if the cam chain 81 is lifted on the upstream side of the meshing start position SP, it can be placed back into the proper tooth/groove of the driven sprocket wheel 71S at the meshing start position SP. Therefore, even if the chain tensioner 82 ceases to adequately function, mismeshing of the cam chain 81 can still be restrained.

The shortest distance Dmin (see FIG. 10) between the cam chain 81 and the rib 90 preferably satisfies the relationship Dmin<Lcl-(Rp-Rso). When this relationship is satisfied, the cam chain 81 abutting with the rib 90 (i.e., being guided by the rib 90) has a meshing margin with the driven sprocket wheel 71S (i.e., the link teeth 86b of the link plate 86 will engage with the teeth of the driven sprocket wheel 71S), so that mismeshing of the cam chain 81 can be better restrained.

Moreover, the shortest distance Dmin between the cam chain 81 and the rib 90 preferably satisfies the relationship Dmin<Lcg-(Rp-Rso). When this relationship is satisfied, even if the cam chain 81 wants to shift laterally, the meshing edge 85b of the guide plate 85 will abut with the teeth of the driven sprocket wheel 71S, whereby a lateral shift of the cam chain 81 can be restrained.

When the teeth of the driven sprocket wheel 71S receive a gearing load from the cam chain 81, the load is chiefly distributed on the tense-side half, so that a lift of the cam chain 81 is likely to occur on the slack-side half. Therefore, the position at which the distance between the cam chain 81 and the rib 90 becomes shortest (i.e., the position defining the shortest distance Dmin) is preferably within an upstream half of the region where the cam chain 81 is meshed with the driven sprocket wheel 71S (i.e., the tense-side half).

Moreover, from a standpoint of allowing the rib 90 to suitably function as a guide for the cam chain 81, the distance between the cam chain 81 and the rib 90 preferably becomes smaller from the upstream end toward the downstream end of the rib 90, on the upstream side from the position at which the distance between the cam chain 81 and the rib 90 is shortest.

From a standpoint of better restraining mismeshing and a lateral shift of the cam chain 81, as is illustrated, the rib 90 is preferably disposed so as to overlap the center of the driven sprocket wheel 71S along the thickness direction when viewed from a radial direction DD of the driven sprocket wheel 71S defined at the meshing start position SP.

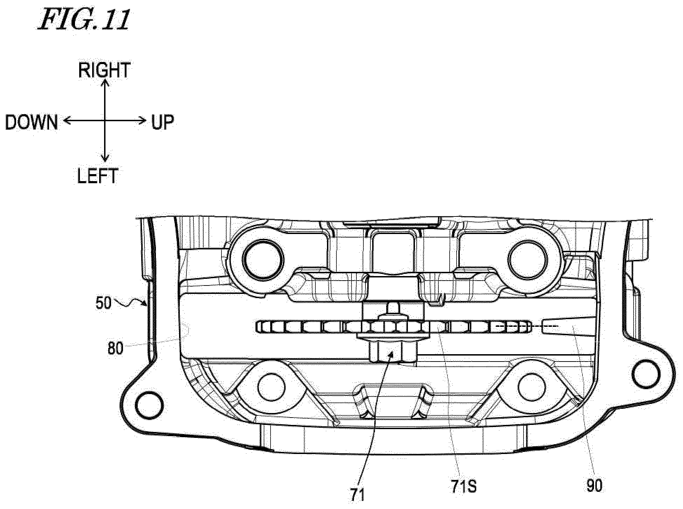

Note that the shape of the rib 90 is not limited to that illustrated in FIG. 6 and FIG. 7. FIG. 11 shows another exemplary shape of the rib 90. In the example shown in FIG. 7, the rib 90 extends along the right-left direction when viewed from the front-rear direction; in the example shown in FIG. 11, the rib 90 extends along the up-down direction when viewed from the front-rear direction. Similar effects to those from the use of rib 90 shown in FIG. 6 and FIG. 7 can be obtained by using the rib 90 shown in FIG. 11. The rib 90 shown in FIG. 11 also is preferably disposed so as to overlap the center of the driven sprocket wheel 71S along the thickness direction when viewed from a radial direction DD of the driven sprocket wheel 71S defined at the meshing start position SP.

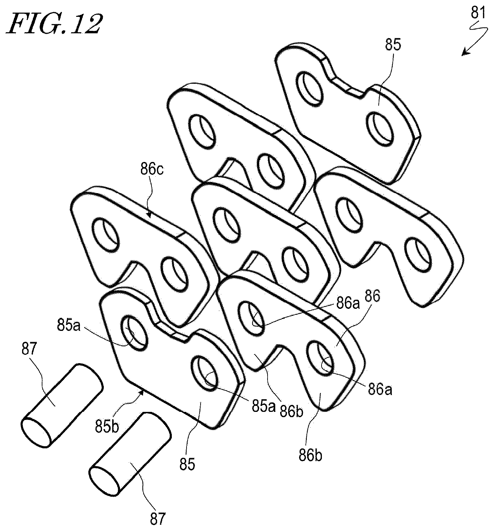

Note also that the configuration of the cam chain 81 is not limited to that illustrated in FIG. 5A and FIG. 5B. For example, while the center of the meshing edge 85b of the guide plate 85 is concaved in the cam chain 81 illustrated in FIG. 5A and FIG. 5B, the meshing edge 85b of the guide plate 85 may have a linear shape as shown in FIG. 12. Alternatively, the center of the meshing edge 85b of the guide plate 85 may protrude.

As described above, an internal combustion engine 20 according to an embodiment of the present teaching includes: a crankcase 30; a cylinder body 40 extending in a predetermined direction from the crankcase 30; a cylinder head 50 coupled to the cylinder body 40; a cylinder head cover 60 coupled to the cylinder head 50; a cam chamber 70 defined by the cylinder head 50 and the cylinder head cover 60; a cam chain chamber 80 defined by the crankcase 30, the cylinder body 40, the cylinder head 50, and the cylinder head cover 60; a crankshaft 22 disposed in the crankcase 30; a drive sprocket wheel 22S which is disposed in the cam chain chamber 80 and which rotates integrally with the crankshaft 22; a cam shaft 71 disposed in the cam chamber 70 and the cam chain chamber 80; a driven sprocket wheel 71S which is disposed in the cam chain chamber 80 and which rotates integrally with the cam shaft 71; a cam chain 81 being disposed in the cam chain chamber 80 and wound across the drive sprocket wheel 22S and the driven sprocket wheel 71S; a cam chain guide 83A which is disposed in the cam chain chamber 80 and which guides the cam chain 81; a chain tensioner 82 which presses against the cam chain 81 via the cam chain guide 83A in between the drive sprocket wheel 22S and the driven sprocket wheel 71S; and a rib 90 which is disposed in the cam chain chamber 80 in such a manner as to restrain a lift of the cam chain 81. The rib 90 is monolithically formed with the cylinder head 50, and the rib 90 includes a portion located upstream of a meshing start position SP, the meshing start position SP defining a position at which engagement begins between the cam chain 81 and the driven sprocket wheel 71S. The cam chain 81 includes a plurality of guide plates 85 disposed on an outside of the cam chain 81 regarding a width direction of the cam chain 81, and a plurality of link plates 86 disposed inward of the plurality of guide plates 85 regarding the width direction of the cam chain 81. Each of the plurality of link plates 86 includes a pair of first pinholes 86a into each of which a pin 87 is inserted, and a pair of link teeth 86b extending from the pair of first pinholes 86a toward a meshing side. Given a length Lcl from a center of each of the pair of first pinholes 86a of the link plate 86 to a leading end of a corresponding link tooth 86b, a length Lcs from a center of each of the pair of first pinholes 86a to a non-meshing edge 86c of the link plate 86, an interval P between the pair of first pinholes 86a, an outermost radius Rso of the driven sprocket wheel 71S, and a radius Rp of a pitch circle in a region where the cam chain 81 is meshed with the driven sprocket wheel 71S, such that $\theta = \cos^{-1}\{Rp/(Rso+Lcl)\}$, the rib 90 at least locally includes a region inside a circle having a radius Lcs and having a center at point $\gamma$, which is located upstream of the meshing start position SP by $(Rso+Lcl)\cdot\sin\theta-P\cdot\cos\theta$ in a direction substantially parallel to a direction of travel M of the cam chain 81 and which is distant from the meshing start position SP by $P\cdot\sin\theta$ toward a non-meshing side in a direction substantially parallel to a height direction HD of the cam chain 81.

The internal combustion engine 20 according to an embodiment of the present teaching includes the rib 90 disposed in the cam chain chamber 80, thus being able to restrain a lift of the cam chain 81 with the rib 90. Since the rib 90 is monolithically formed with the cylinder head 50, the provision of the rib 90 does not result in an increase in the number of parts, thereby suppressing an increase in the production cost as compared to the case of attaching a rib that is a separate piece from the cylinder head 50. Moreover, since the rib 90 is monolithically formed with the cylinder head 50, the rib 90 can be accurately disposed in the desired position. Furthermore, the rib 90 being monolithically formed with the cylinder head 50 can naturally be a rigid member having a certain level of rigidity or greater. Therefore, the shortest distance between the rib 90 and the cam chain 81 is less likely to fluctuate than in the case where an elastic member is attached as a rib, such that the rib 90 can suitably function as a guide for the cam chain 81.

Moreover, since the rib 90 includes a portion located upstream of the meshing start position SP of the cam chain 81 with respect to the driven sprocket wheel 71S, a lift at the meshing start position SP can be suitably restrained. Furthermore, when the rib 90 includes a portion located upstream of the meshing start position SP, a sound caused during a malfunction of the chain tensioner 82 by the cam chain 81 hitting that portion will allow the rider to know that an abnormality exists (i.e., malfunctioning of the chain tensioner 82).

Moreover, because the rib 90 includes a portion located upstream of the meshing start position SP, and at least locally includes a region inside a circle having a radius Lcs and having a center at point $\gamma$, which is located upstream of the meshing start position SP by $(Rso+Lcl)\cdot\sin\theta-P\cdot\cos\theta$ in a direction substantially parallel to the direction of travel M of the cam chain 81 and which is distant from the meshing start position by $P\cdot\sin\theta$ toward the non-meshing side in a direction substantially parallel to the height direction HD of the cam chain 81, even if the cam chain 81 is lifted on the upstream side of the meshing start position SP, it can be placed back into the proper tooth/groove of the driven sprocket wheel 71S at the meshing start position SP. Therefore, even if the chain tensioner 82 ceases to adequately function, mismeshing of the cam chain 81 can still be restrained.

In one embodiment, the rib 90 includes a portion located downstream of the meshing start position SP; a position at which a distance between the cam chain 81 and the rib 90 is shortest is in the region where the cam chain 81 is meshed with the driven sprocket wheel 71S; and, given a shortest distance Dmin between the cam chain 81 and the rib 90, a length Lcl from a center of each of the pair of first pinholes 86a to a leading end of a corresponding link tooth 86b, an outermost radius Rso of the driven sprocket wheel 71S, and a radius Rp of a pitch circle in the region where the cam chain 81 is meshed with the driven sprocket wheel 71S, the relationship Dmin<Lcl-(Rp-Rso) is satisfied.

When the shortest distance Dmin between the cam chain 81 and the rib 90, the length Lcl from the center of the each pinhole (first pinhole) 86a of the link plate 86 to the leading end of the corresponding link tooth 86b (i.e., the "meshing side dimension" of the cam chain 81), the outermost radius Rso of the driven sprocket wheel 71S, and the radius Rp of a pitch circle in a region where the cam chain 81 is meshed with the driven sprocket wheel 71S satisfy the relationship Dmin<Lcl-(Rp-Rso), the cam chain 81 abutting with the rib 90 (i.e., being guided by the rib 90) has a meshing margin with the driven sprocket wheel 71S, so that mismeshing of the cam chain 81 can be better restrained.

In one embodiment, the rib 90 includes a portion located downstream of the meshing start position SP; a position at which a distance between the cam chain 81 and the rib 90 is shortest is in the region where the cam chain 81 is meshed with the driven sprocket wheel 71S; each of the plurality of guide plates 85 includes a pair of second pinholes 85a; and, given a shortest distance Dmin between the cam chain 81 and the rib 90, a length Lcg from a pitch line being a straight line that contains centers of the pair of second pinholes 85a to a center of a meshing edge 85b of each guide plate 85, an outermost radius Rso of the driven sprocket wheel 71S, and a radius Rp of a pitch circle in the region where the cam chain 81 is meshed with the driven sprocket wheel 71S, the relationship Dmin<Lcg-(Rp-Rso) is satisfied.

When the shortest distance Dmin between the cam chain 81 and the rib 90, the length Lcg from the pitch line, i.e., a straight line containing the centers of the pair of pinholes (second pinholes) 85a of the guide plate 85, to the center of the meshing edge 85b of the guide plate 85 the outermost radius Rso of the driven sprocket wheel 71S, and the radius Rp of a pitch circle in a region where the cam chain 81 is meshed with the driven sprocket wheel 71S satisfy the relationship Dmin<Lcg-(Rp-Rso), a lateral shift of the cam chain 81 can be restrained.

In one embodiment, a position at which a distance between the cam chain 81 and the rib 90 is shortest is within an upstream half of the region where the cam chain 81 is meshed with the driven sprocket wheel 71S.

When the teeth of the driven sprocket wheel 71S receive a gearing load from the cam chain 81, the load is chiefly distributed on the tense-side half, so that a lift of the cam chain 81 is likely to occur on the slack-side half. Therefore, the position at which the distance between the cam chain 81 and the rib 90 becomes shortest (i.e., the position defining the shortest distance Dmin) is preferably within an upstream half of the region where the cam chain 81is meshed with the driven sprocket wheel 71S.

In one embodiment, the distance between the cam chain 81 and the rib 90 becomes smaller from an upstream end toward a downstream end of the rib 90, on an upstream side from the position at which the distance between the cam chain 81 and the rib 90 is shortest.

From a standpoint of allowing the rib 90 to suitably function as a guide for the cam chain 81, the distance between the cam chain 81 and the rib 90 preferably becomes smaller from the upstream end toward the downstream end of the rib 90, on the upstream side from a position at which the distance between the cam chain 81 and the rib 90 is shortest.

In one embodiment, the rib 90 is disposed so as to overlap a center of the driven sprocket wheel 71S along a thickness direction thereof when viewed from a radial direction DD of the driven sprocket wheel 71S defined at the meshing start position SP.

From a standpoint of better restraining mismeshing and a lateral shift of the cam chain 81, the rib 90 is preferably disposed so as to overlap the center of the driven sprocket wheel 71S along the thickness direction when viewed from a radial direction DD of the driven sprocket wheel 71S defined at the meshing start position SP.

A straddled vehicle 1 according to an embodiment of the present teaching includes an internal combustion engine 20 having any of the aforementioned configurations.

An internal combustion engine 20 having any of the aforementioned configurations can be suitably used for the straddled vehicle 1.

According to an embodiment of the present teaching, there is provided an internal combustion engine in which a cam chain that has become lifted can promptly find a proper tooth/groove, so that mismeshing of the cam chain can be suppressed more reliably. Internal combustion engines according to embodiments of the present teaching can be suitably used for various straddled vehicles.


## Claims

1. An internal combustion engine (20) comprising:

   a crankcase (30);
   a cylinder body (40) extending in a predetermined direction from the crankcase (30);
   a cylinder head (50) coupled to the cylinder body (40);
   a cylinder head cover (60) coupled to the cylinder head (50);
   a cam chamber (70) defined by the cylinder head (50) and the cylinder head cover (60);
   a cam chain chamber (80) defined by the crankcase (30), the cylinder body (40), the cylinder head (50), and the cylinder head cover (60);
   a crankshaft (22) disposed in the crankcase (30);
   a drive sprocket wheel (22S) which is disposed in the cam chain chamber (80) and
   which is configured to rotate integrally with the crankshaft (22);
   a cam shaft (71) disposed in the cam chamber (70) and the cam chain chamber (80);
   a driven sprocket wheel (71S) which is disposed in the cam chain chamber (80) and
   which is configured to rotate integrally with the cam shaft (71);
   a cam chain (81) being disposed in the cam chain chamber (80) and wound across the drive sprocket wheel (22S) and the driven sprocket wheel (71S);
   a cam chain guide (83A) which is disposed in the cam chain chamber (80) and which guides the cam chain (81);
   a chain tensioner (82) which presses against the cam chain (81) via the cam chain guide (83A) in between the drive sprocket wheel (22S) and the driven sprocket wheel (71S); and
   a rib (90) which is disposed in the cam chain chamber (80) in such a manner as to restrain a lift of the cam chain (81), wherein,
   the rib (90) is monolithically formed with the cylinder head (50);
   the cam chain (81) includes a plurality of guide plates (85) disposed on an outside of the cam chain (81) regarding a width direction of the cam chain (81), and a plurality of link plates (86) disposed inward of the plurality of guide plates (85) regarding the width direction of the cam chain (81);

each of the plurality of link plates (86) includes a pair of first pinholes (86a) into each of which a pin (87) is inserted, **characterized by**

a pair of link teeth (86b) extending from the pair of first pinholes (86a) toward a meshing side; and,

given a length Lcl from a center of each of the pair of first pinholes (86a) of the link plate (86) to a leading end of a corresponding link tooth (86b), a length Lcs from a center of each of the pair of first pinholes (86a) to a non-meshing edge (86c) of the link plate (86), an interval P between the pair of first pinholes (86a), an outermost radius Rso of the driven sprocket wheel (71S), and a radius Rp of a pitch circle in a region where the cam chain (81) is meshed with the driven sprocket wheel (71S), such that $\theta = \cos^{-1}\{Rp/(Rso+Lcl)\}$, wherein the rib (90) includes a portion located upstream of a meshing start position (SP), the meshing start position (SP) defining a position at which engagement begins between the cam chain (81) and the driven sprocket wheel (71S);

the rib (90) at least locally includes a region inside a circle having a radius Lcs and having a center at a point which is located upstream of the meshing start position (SP) by $(Rso+Lcl)\cdot\sin\theta-P\cdot\cos\theta$ in a direction substantially parallel to a direction of travel of the cam chain (81) and which is distant from the meshing start position (SP) by $P\cdot\sin\theta$ toward a non-meshing side in a direction substantially parallel to a height direction of the cam chain (81).

2. The internal combustion engine (20) of claim 1, **characterized in that** the rib (90) includes a portion located downstream of the meshing start position (SP);

a position at which a distance (Dmin) between the cam chain (81) and the rib (90) is shortest is in the region where the cam chain (81) is meshed with the driven sprocket wheel (71S); and,

given a shortest distance Dmin between the cam chain (81) and the rib (90), a length Lcl from a center of each of the pair of first pinholes (86a) to a leading end of a corresponding link tooth (86b), an outermost radius Rso of the driven sprocket wheel (71S), and a radius Rp of a pitch circle in the region where the cam chain (81) is meshed with the driven sprocket wheel (71S), the relationship Dmin<Lcl-(Rp-Rso) is satisfied.

3. The internal combustion engine (20) of claim 1, **characterized in that** the rib (90) includes a portion located downstream of the meshing start position (SP);

a position at which a distance (Dmin) between the cam chain (81) and the rib (90) is shortest is in the region where the cam chain (81) is meshed with the driven sprocket wheel (71S);

each of the plurality of guide plates (85) includes a pair of second pinholes (85a); and, given a shortest distance Dmin between the cam chain (81) and the rib (90), a length Lcg from a pitch line being a straight line that contains centers of the pair of second pinholes (85a) to a center of a meshing edge (85b) of each guide plate (85), an outermost radius Rso of the driven sprocket wheel (71S), and a radius Rp of a pitch circle in the region where the cam chain (81) is meshed with the driven sprocket wheel (71S), the relationship Dmin<Lcg-(Rp-Rso) is satisfied.

4. The internal combustion engine (20) of any of claims 1 to 3, **characterized in that** a position at which a distance (Dmin) between the cam chain (81) and the rib (90) is shortest is within an upstream half of the region where the cam chain (81) is meshed with the driven sprocket wheel (71S).

5. The internal combustion engine (20) of claim 4, **characterized in that** the distance between the cam chain (81) and the rib (90) becomes smaller from an upstream end toward a downstream end of the rib (90), on an upstream side from the position at which the distance (Dmin) between the cam chain (81) and the rib (90) is shortest.

6. The internal combustion engine (20) of any of claims 1 to 5, **characterized in that** the rib (90) is disposed so as to overlap a center of the driven sprocket wheel (71S) along a thickness direction thereof when viewed from a radial direction of the driven sprocket wheel (71S) defined at the meshing start position (SP).

7. A straddled vehicle comprising the internal combustion engine (20) of any of claims 1 to 6.

**Patentansprüche**

1. Ein Brennkraftmaschine (20) mit innerer Verbrennung, die umfasst:

ein Kurbelgehäuse (30);

einen Zylinderkörper (40), der sich in einer vorgegebenen Richtung vom Kurbelgehäuse (30) aus erstreckt;

einen Zylinderkopf (50), der mit dem Zylinderkörper (40) gekoppelt ist;

einen Zylinderkopfdeckel (60), der mit dem Zylinderkopf (50) gekoppelt ist;

eine Nockenkammer (70), die durch den Zylinderkopf (50) und den Zylinderkopfdeckel (60) definiert ist;

eine Steuerkettenkammer (80), die durch das Kurbelgehäuse (30), den Zylinderkörper (40), den Zylinderkopf (50) und den Zylinderkopfdeckel (60) definiert ist;

eine Kurbelwelle (22), die in dem Kurbelgehäuse (30) angeordnet ist;

ein Antriebskettenrad (22S), das in der Steuerkettenkammer (80) angeordnet ist, und das konfiguriert ist, um integral mit der Kurbelwelle (22) zu drehen;

eine Nockenwelle (71), die in der Nockenkammer (70) und der Steuerkettenkammer (80) angeordnet ist;

ein angetriebenes Kettenrad (71S), das in der Steuerkettenkammer (80) angeordnet ist, und das konfiguriert ist, um integral mit der Nockenwelle (71) zu drehen;

eine Steuerkette (81), die in der Steuerkettenkammer (80) angeordnet ist, und die über das Antriebskettenrad (22S) und das angetriebene Kettenrad (71S) gewickelt ist; eine Steuerkettenführung (83A), die in der Steuerkettenkammer (80) angeordnet ist, und welche die Steuerkette (81) führt;

einen Kettenspanner (82), der gegen die Steuerkette (81) über die Steuerkettenführung (83A) zwischen dem Antriebskettenrad (22S) und dem angetriebenen Kettenrad (71S) drückt; und

eine Rippe (90), die in der Steuerkettenkammer (80) angeordnet ist, um einen Hub der Steuerkette (81) zu beschränken, wobei,

die Rippe (90) monolithisch mit dem Zylinderkopf (50) ausgebildet ist;

die Steuerkette (81) eine Mehrzahl von Führungsplatten (85), die an einer Außenseite der Steuerkette (81) in Bezug auf eine Breitenrichtung der Steuerkette (81) angeordnet sind, und eine Mehrzahl von Verbindungsplatten (86), die innerhalb der Mehrzahl von Führungsplatten (85) in Bezug auf die Breitenrichtung der Steuerkette (81) angeordnet sind, beinhaltet;

jede der Mehrzahl von Verbindungsplatten (86) ein Paar erster Stiftlöcher (86a) beinhaltet, in die jeweils ein Stift (87) eingesetzt ist, **gekennzeichnet durch** ein Paar von Verbindungszähnen (86b), die sich von dem Paar von ersten Stiftlöchern (86a) in Richtung einer Eingriffsseite erstrecken; und,

mit einer Länge Lcl von einer Mitte jedes des Paares von ersten Stiftlöchern (86a) der Verbindungsplatte (86) zu einem vorderen Ende eines entsprechenden Verbindungszahns (86b), einer Länge Lcs von einer Mitte jedes des Paares von ersten Stiftlöchern (86a) zu einer nicht eingreifenden Kante (86c) der Verbindungsplatte (86), einem Abstand P zwischen dem Paar von ersten Stiftlöchern (86a), einem äußersten Radius Rso des angetriebenen Kettenrads (71S), und einem Radius Rp eines Teilkreises in einem Bereich, in dem die Steuerkette (81) mit dem angetriebenen Kettenrad (71S) kämmt, so dass $\theta = \cos^{-1}\{Rp/(Rso+Lcl)\}$, wobei die Rippe (90) einen Abschnitt beinhaltet, der stromaufwärts von einer Eingriffsstartposition (SP) angeordnet ist, die Eingriffsstartposition (SP) eine Position definiert, an welcher der Eingriff zwischen der Steuerkette (81) und dem angetriebenen Kettenrad (71S) beginnt;

die Rippe (90) zumindest örtlich einen Bereich innerhalb eines Kreises mit einem Radius Lcs einschließt und einen Mittelpunkt an einem Punkt hat, der stromaufwärts von der Eingriffsstartposition (SP) um $(Rso+Lcl)\cdot\sin\theta - P\cdot\cos\theta$ in einer Richtung im Wesentlichen parallel zu einer Bewegungsrichtung der Steuerkette (81) liegt, und der von der Eingriffsstartposition (SP) um $P\cdot\sin\theta$ zu einer nicht eingreifenden Seite in einer Richtung im Wesentlichen parallel zu einer Höhenrichtung der Steuerkette (81) entfernt ist.

2. Die Brennkraftmaschine (20) mit innerer Verbrennung gemäß Anspruch 1, **dadurch gekennzeichnet, dass** die Rippe (90) einen Abschnitt beinhaltet, der sich stromabwärts der Eingriffsstartposition (SP) befindet;

eine Position, bei der ein Abstand (Dmin) zwischen der Steuerkette (81) und der Rippe (90) am kürzesten ist, in dem Bereich liegt, in dem die Steuerkette (81) mit dem angetriebenen Kettenrad (71S) in Eingriff ist; und, bei einem kürzesten Abstand Dmin zwischen der Steuerkette (81) und der Rippe (90), einer Länge Lcl von einer Mitte jedes des Paars erster Stiftlöcher (86a) zu einem vorderen Ende eines entsprechenden Verbindungszahns (86b), einem äußersten Radius Rso des angetriebenen Kettenrads (71S) und einem Radius Rp eines Teilkreises in dem Bereich, in dem die Steuerkette (81) mit dem angetriebenen Kettenrad (71S) in Eingriff ist, die Beziehung Dmin<Lcl-(Rp-Rso) erfüllt ist.

3. Die Brennkraftmaschine (20) mit innerer Verbrennung gemäß Anspruch 1, **dadurch gekennzeichnet, dass** die Rippe (90) einen Abschnitt beinhaltet, der sich stromabwärts der Eingriffsstartposition (SP) befindet;

eine Position, bei der ein Abstand (Dmin) zwischen der Steuerkette (81) und der Rippe (90) am kürzesten ist, in dem Bereich liegt, in dem die Steuerkette (81) mit dem angetriebenen Kettenrad (71S) in Eingriff ist;
jede der Mehrzahl von Führungsplatten (85) ein Paar von zweiten Stiftlöchern (85a) beinhaltet; und,
bei einem kürzesten Abstand Dmin zwischen der Steuerkette (81) und der Rippe (90), einer Länge Lcg von
einer Teilungslinie, die eine gerade Linie ist, welche die Mittelpunkte des Paars zweiter Stiftlöcher (85a) enthält,
zu einem Mittelpunkt einer Eingriffskante (85b) jeder Führungsplatte (85), einem äußersten Radius Rso des
angetriebenen Kettenrads (71S) und einem Radius Rp eines Teilkreises in dem Bereich, in dem die Steuerkette
(81) mit dem angetriebenen Kettenrad (71S) in Eingriff ist, die Beziehung Dmin<Lcg-(Rp-Rso) erfüllt ist.

4. Die Brennkraftmaschine (20) mit innerer Verbrennung gemäß irgendeinem der Ansprüche 1 bis 3, **dadurch gekennzeichnet, dass** eine Position, an der ein Abstand (Dmin) zwischen der Steuerkette (81) und der Rippe (90) am kürzesten ist, innerhalb einer stromaufwärts gelegenen Hälfte des Bereichs liegt, in dem die Steuerkette (81) mit dem angetriebenen Kettenrad (71S) in Eingriff ist.

5. Die Brennkraftmaschine (20) mit innerer Verbrennung gemäß Anspruch 4, **dadurch gekennzeichnet, dass** der Abstand zwischen der Steuerkette (81) und der Rippe (90) von einem stromaufwärts gelegenen Ende zu einem stromabwärts gelegenen Ende der Rippe (90) auf einer stromaufwärts gelegenen Seite von der Position, an der der Abstand (Dmin) zwischen der Steuerkette (81) und der Rippe (90) am kürzesten ist, kleiner wird.

6. Die Brennkraftmaschine (20) mit innerer Verbrennung gemäß irgendeinem der Ansprüche 1 bis 5, **dadurch gekennzeichnet, dass** die Rippe (90) angeordnet ist, so dass sie eine Mitte des angetriebenen Kettenrads (71S) entlang einer Dickenrichtung desselben überlappt, wenn von einer radialen Richtung des angetriebenen Kettenrads (71S) aus betrachtet, die an der Eingriffsstartposition (SP) definiert ist.

7. Ein Spreiz-Sitz-Fahrzeug mit einer Brennkraftmaschine (20) mit innerer Verbrennung gemäß irgendeinem der Ansprüche 1 bis 6.

**Revendications**

1. Moteur à combustion interne (20) comprenant :

un carter moteur (30),
un bloc cylindre (40) s'étendant dans une direction prédéterminée à partir du carter moteur (30),
une culasse (50) couplée au bloc cylindre (40),
un couvre culasse (60) couplé à la culasse (50),
une chambre de distribution (70) définie par la culasse (50) et le couvre culasse (60),
une chambre de chaîne de distribution (80) définie par le carter moteur (30), le bloc cylindre (40), la culasse
(50) et le couvre culasse (60),
un vilebrequin (22) placé dans le carter moteur (30),
une roue d'engrenage d'entraînement (22S) qui est placée dans la chambre de chaîne de distribution (80) et
qui est configurée pour tourner en même temps que le vilebrequin (22),
un arbre à cames (71) placé dans la chambre de distribution (70) et la chambre de chaîne de distribution (80),
une roue d'engrenage entraîné (71S) qui est placée dans la chambre de chaîne de distribution (80) et qui est
configurée pour tourner en même temps que l'arbre à cames (71),
une chaîne de distribution (81) disposée dans la chambre de chaîne de distribution (80) et enroulée autour de
la roue d'engrenage d'entraînement (22S) et la roue d'engrenage entraîné (71S),
un guide de chaîne de distribution (83A) qui est placé dans la chambre de chaîne de distribution (80) et qui
guide la chaîne de distribution (81),
un tendeur de chaîne (82) qui est comprimé contre la chaîne de distribution (81) par l'intermédiaire du guide
de chaîne de distribution (83A) entre la roue d'engrenage d'entraînement (22S) et la roue d'engrenage entraîné
(71S), et
une nervure (90) qui est placée dans la chambre de chaîne de distribution (80) de manière à limiter un décollement
de la chaîne de distribution (81), où
la nervure (90) est formée en un seul tenant avec la culasse (50),
la chaîne de distribution (81) inclut une pluralité de plaques de guidage (85) placées sur la partie externe de la
chaîne de distribution (81) relativement à la direction de la largeur de la chaîne de distribution (81), ainsi qu'une
pluralité de plaques de liaison (86) placées à l'intérieur de la pluralité de plaques de guidage (85) relativement
à la direction de la largeur de la chaîne de distribution (81),

chacune de la pluralité de plaques de liaison (86) inclut une paire de premiers trous de goupille (86a) dans chacun desquels est insérée une goupille (87), **caractérisé par** :
une paire de dents de chaînon (86b) s'étendant depuis la paire de premiers trous de goupille (86a) en direction d'un côté maillant, et :

étant donnés la longueur Lcl depuis le centre de chacun de la paire de premiers trous de goupille (86a) de la plaque de liaison (86) jusqu'à l'extrémité avant d'une dent de chaînon (86b) correspondante, la longueur Lcs depuis le centre de chacun de la paire de premiers trous de goupille (86a) jusqu'à un bord non maillant (86c) de la plaque de liaison (86), l'intervalle P entre la paire de premiers trous de goupille (86a), le rayon extrême Rso de la roue d'engrenage entraîné (71S) et le rayon Rp du cercle primitif dans la zone où la chaîne de distribution (81) s'engrène avec la roue d'engrenage entraîné (71S), alors

$$\theta = \cos^{-1}\{Rp\ /\ (Rso\ +\ Lcl)\},$$

la nervure (90) incluant une partie située en amont de la position de début d'engrènement (SP), la position de début d'engrènement (SP) définissant une position à laquelle débute l'engrènement entre la chaîne de distribution (81) et la roue d'engrenage entraîné (71S),
la nervure (90) inclut au moins localement une zone à l'intérieur d'un cercle présentant un rayon Lcs et dont le centre est situé à un point qui est éloigné en amont de la position de début d'engrènement (SP) de (Rso + Lcl) * sin θ - P * cosθ dans une direction pratiquement parallèle à la direction de déplacement de la chaîne de distribution (81) et qui est distante de la position de début d'engrènement (SP) de P * sin θ en direction du côté non maillant dans une direction pratiquement parallèle à la direction de la hauteur de la chaîne de distribution (81).

2. Moteur à combustion interne (20) selon la revendication 1, **caractérisé en ce que** la nervure (90) inclut une partie située en aval de la position de début d'engrènement (SP),

la position à laquelle la distance (Dmin) entre la chaîne de distribution (81) et la nervure (90) est la plus courte se trouve dans la zone où la chaîne de distribution (81) est engrenée avec la roue d'engrenage entraîné (71S), et étant donnés la distance la plus courte Dmin entre la chaîne de distribution (81) et la nervure (90), la longueur Lcl depuis le centre de chacun de la paire de premiers trous de goupille (86a) jusqu'à l'extrémité avant d'une dent de chaînon (86b), le rayon extrême Rso de la roue d'engrenage entraîné (71S) et le rayon Rp du cercle primitif dans la zone où est engrenée la chaîne de distribution (81) avec la roue d'engrenage entraîné (71S), la relation Dmin < Lcl - (Rp - Rso) est satisfaite.

3. Moteur à combustion interne (20) selon la revendication 1, **caractérisé en ce que** la nervure (90) inclut une partie située en aval de la position de début d'engrènement (SP),

la position à laquelle la distance (Dmin) entre la chaîne de distribution (81) et la nervure (90) est la plus courte se trouve dans la zone où la chaîne de distribution (81) est engrenée avec la roue d'engrenage entraîné (71S), chacune de la pluralité de plaques de guidage (85) inclut une paire de seconds trous de goupille (85a), et étant donnés la distance la plus courte Dmin entre la chaîne de distribution (81) et la nervure (90), la longueur Lcg depuis la ligne primitive qui est la ligne droite qui contient les centres de la paire de seconds trous de goupille (85a) jusqu'au centre du bord maillant (85b) de chaque plaque de guidage (85), le rayon extrême Rso de la roue d'engrenage entraîné (71S) et le rayon Rp d'un cercle primitif dans la zone où est engrenée la chaîne de distribution (81) avec la roue d'engrenage entraîné (71S), la relation Dmin < Lcg - (Rp - Rso) est satisfaite.

4. Moteur à combustion interne (20) selon l'une quelconque des revendications 1 à 3, **caractérisé en ce que** la position à laquelle la distance (Dmin) entre la chaîne de distribution (81) et la nervure (90) est la plus courte se trouve à l'intérieur de la moitié en amont de la zone où est engrenée la chaîne de distribution (81) avec la roue d'engrenage entraîné (71S).

5. Moteur à combustion interne (20) selon la revendication 4, **caractérisé en ce que** la distance entre la chaîne de distribution (81) et la nervure (90) devient plus petite depuis l'extrémité avant en direction de l'extrémité aval de la nervure (90), sur le côté amont depuis la position à laquelle la distance (Dmin) entre la chaîne de distribution (81) et la nervure (90) est la plus courte.

**6.** Moteur à combustion interne (20) selon l'une quelconque des revendications 1 à 5, **caractérisé en ce que** la nervure (90) est placée de sorte à chevaucher le centre de la roue d'engrenage entraîné (71S) le long de sa direction d'épaisseur lorsqu'elle est vue depuis la direction radiale de la roue d'engrenage entraîné (71S) définie à la position de début d'engrènement (SP).

**7.** Véhicule à selle comprenant le moteur à combustion interne (100) conforme à l'une quelconque des revendications 1 à 6.

FIG.1

FIG.2

**FIG.3**

# FIG.4

*FIG.5A*

*FIG.5B*

**FIG.6**

**FIG.7**

RIGHT

DOWN ← → UP

LEFT

50

80

71        71S        90

*FIG.8A*

*FIG.8B*

FIG.9

*FIG.10*

*FIG.11*

FIG.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019120243 A

- JP 56044926 U